# EUROPÄISCHE PATENTSCHRIFT

(11) **EP 3 953 189 B1**
(45) Veröffentlichungstag und Bekanntmachung des Hinweises auf die Patenterteilung: **15.11.2023**
(21) Anmeldenummer: 20707595.3
(22) Anmeldetag: 24.02.2020
(51) Int. Cl.: B60C 19/00, B60C 15/06, B29D 30/00, B29D 30/48

(54) **REIFEN**
TYRE
PNEU

(30) Priorität: 12.04.2019 DE 102019205298
(43) Veröffentlichungstag der Anmeldung: 16.02.2022
(73) Patentinhaber: Continental Reifen Deutschland GmbH, 30165 Hannover (DE)
(72) Erfinder: MOSKO, Martin, 30419 Hannover (DE); BELOBRAD, Juraj, 30419 Hannover (DE); EHMKE, Tobias, 30419 Hannover (DE)
(74) Vertreter: Continental Corporation
(86) Internationale Anmeldenummer: PCT/EP2020/054729
(87) Internationale Veröffentlichungsnummer: WO 2020/207653

(56) Entgegenhaltungen:
- JP-A- 2000 108 619
- US-A- 4 911 217
- US-A1- 2010 123 584
- US-B1- 6 192 951

## Beschreibung

Die Erfindung bezieht sich auf einen Reifen.

Die Erfindung geht aus von einem Reifen, wobei der Reifen um eine Rotationsachse in eine Umlaufrichtung rotierbar ist. Der Reifen weist mindestens eine elektromagnetische Sende-und Empfangsvorrichtung, mindestens einen Wulstkern und mindestens einen Apex auf. Der mindestens eine Apex ist aus einem ersten homogenen Kautschukmaterial und aus einem zweiten homogenen Kautschukmaterial ausgebildet. Das erste homogene Kautschukmaterial ist an dem mindestens einen Wulstkern angeordnet und das erste homogene Kautschukmaterial ist räumlich zwischen dem mindestens einen Wulstkern und dem einen zweiten homogenen Kautschukmaterial angeordnet.

Der Reifen weist insbesondere mindestens eine Karkasslage auf.

Bei der elektromagnetischen Sende- und Empfangsvorrichtung handelt es sich insbesondere um eine RFID-Vorrichtung. RFID steht für Radio Frequency Identification und bedeutet Identifizierung mit Hilfe elektromagnetischer Wellen.

Aus dem Stand der Technik sind elektromagnetische Sende- und Empfangsvorrichtungen für Reifen bekannt. Beispielsweise wird in der EP2223814B1 eine elektromagnetische Sende-und Empfangsvorrichtung für einen Reifen offenbart.

Ferner ist aus der US 4911217 A, der JP 2000108619 A, der US 2010/123584 A1 und der US 6192951 B1 der Einsatz von elektromagnetischen Sende- und Empfangsvorrichtungen im Reifen bekannt.

Bei den aus dem Stand der Technik bekannten Reifen mit elektromagnetischen Sende- und Empfangsvorrichtungen könnte die Anordnung der elektromagnetischen Sende- und Empfangsvorrichtung mit nicht optimalen Bedingungen für den Betrieb der elektromagnetischen Sende- und Empfangsvorrichtung verbunden sein.

Der Erfindung liegt daher die Aufgabe zugrunde, einen Reifen mit einer elektromagnetischen Sende- und Empfangsvorrichtung bereitzustellen, bei dem ein Betrieb der elektromagnetischen Sende- und Empfangsvorrichtung innerhalb des Reifens verbessert wird.

Gelöst wird die erfindungsgemäße Aufgabe dadurch, dass die mindestens eine elektromagnetische Sende- und Empfangsvorrichtung innerhalb des mindestens einen Apex angeordnet ist.

Durch den erfindungsgemäßen Umstand, wonach die mindestens eine elektromagnetische Sende- und Empfangsvorrichtung innerhalb des mindestens einen Apex angeordnet ist, wird die elektromagnetische Sende- und Empfangsvorrichtung innerhalb eines Bereichs des Reifens angeordnet, der eine Materialhomogenität aufweist. Diese Materialhomogenität stellt einen gegenüber den aus dem Stand der Technik bekannten Lösungen verbesserten Betrieb der elektromagnetischen Sende- und Empfangsvorrichtung sicher. Darüber hinaus ist eine weitere Verwendung von Fremdmaterial nicht erforderlich.

Das Material des Apex weist solche dielektrischen Eigenschaften auf, dass eine optimale Einstellung der elektromagnetischen Sendefähigkeit der elektromagnetischen Sende- und Empfangsvorrichtung ermöglicht werden kann.

Somit wird ein verbesserter Reifen bereitgestellt.

Bei dem Reifen handelt es sich insbesondere um einen Lkw-Reifen, um einen Pkw-Reifen oder um einen Fahrrad-Reifen oder um einen Motorrad-Reifen.

Weitere vorteilhafte Ausgestaltungsformen der vorliegenden Erfindung sind Gegenstand der Unteransprüche.

Gemäß einer vorzugsweisen Ausgestaltungsform der vorliegenden Erfindung ist die mindestens eine elektromagnetische Sende- und Empfangsvorrichtung vollständig innerhalb des mindestens einen Apex angeordnet.

Gemäß einer vorzugsweisen Ausgestaltungsform der vorliegenden Erfindung weist die mindestens eine elektromagnetische Sende- und Empfangsvorrichtung eine Haftvermittlerbeschichtung auf.

Durch den erfindungsgemäßen Umstand, wonach die mindestens eine elektromagnetische Sende- und Empfangsvorrichtung eine Haftvermittlerbeschichtung aufweist, kann eine verbesserte Anbindung der mindestens einen elektromagnetischen Sende- und Empfangsvorrichtung innerhalb des Apex sichergestellt werden.

Gemäß der vorliegenden Erfindung weist die mindestens eine elektromagnetische Sende- und Empfangsvorrichtung eine Informationsspeicherkomponente und mindestens eine Antenne auf, wobei die mindestens eine Antenne in ein Garn eingebracht ist oder die mindestens eine Antenne und die Informationsspeicherkomponente in ein Garn eingebracht sind. Insbesondere ist die mindestens eine Antenne in das Garn eingewoben oder eingesponnen. Einspinnen oder Einweben sind besondere Ausführungsformen des Einbringens. Das Garn ist insbesondere aus einem Kunststoff oder aus einem **Flüssigkristallpolymer** ausgebildet.

Durch den erfindungsgemäßen Umstand, wonach die mindestens eine elektromagnetische Sende-und-Empfangsvorrichtung eine Informationsspeicherkomponente und mindestens eine Antenne aufweist, wobei die mindestens eine Antenne in ein Garn eingebracht ist, wird eine derartige Konstruktion bereitgestellt, die weniger Raum innerhalb eines Reifens einnimmt, als es bei aus dem Stand der Technik bekannten elektromagnetischen Sende- und Empfangsvorrichtungen der Fall ist. Dadurch, dass die elektromagnetische Sende- und Empfangsvorrichtung weniger Raum innerhalb des Reifens beansprucht, wird die Wahrscheinlichkeit einer unerwünschten Wechselwirkung mit dem Reifen vermindert.

Gemäß einer nächsten vorzugsweisen Ausgestaltungsform der vorliegenden Erfindung ist die mindestens eine elektromagnetische Sende- und Empfangsvorrichtung vollständig innerhalb des zweiten homogenen Kautschukmaterials angeordnet.

Die mindestens eine elektromagnetische Sende- und Empfangsvorrichtung ist insbesondere vollständig von dem zweiten homogenen Kautschukmaterial umgeben.

Gemäß einer nächsten vorzugsweisen Ausgestaltungsform der vorliegenden Erfindung beträgt ein erster räumlicher Abstand zwischen einem ersten Oberflächenpunkt der mindestens einen elektromagnetischen Sende- und Empfangsvorrichtung zu einem ersten Oberflächenpunkt des ersten homogenen Kautschukmaterials **mindestens 5 mm. Dabei** handelt es sich bei dem ersten Oberflächenpunkt der mindestens einen elektromagnetischen Sende- und Empfangsvorrichtung und bei dem ersten Oberflächenpunkt des ersten homogenen Kautschukmaterials um die räumlich einander nächstgelegenen Oberflächenpunkte der mindestens einen elektromagnetischen Sende- und Empfangsvorrichtung und des ersten homogenen Kautschukmaterials.

Durch den erfindungsgemäßen Umstand, wonach ein erster räumlicher Abstand zwischen einem ersten Oberflächenpunkt der mindestens einen elektromagnetischen Sende- und Empfangsvorrichtung zu einem ersten Oberflächenpunkt des ersten homogenen Kautschukmaterials **mindestens 5 mm beträgt, wobei** es sich bei dem ersten Oberflächenpunkt der mindestens einen elektromagnetischen Sende- und Empfangsvorrichtung und bei dem ersten Oberflächenpunkt des ersten homogenen Kautschukmaterials um die räumlich einander nächstgelegenen Oberflächenpunkte der mindestens einen elektromagnetischen Sende- und Empfangsvorrichtung und des ersten homogenen Kautschukmaterials handelt, **wird ein mechanischer Schutz der** mindestens einen elektromagnetischen Sende- und Empfangsvorrichtung sichergestellt und es wird sichergestellt, dass die mindestens eine elektromagnetische Sende- und Empfangsvorrichtung innerhalb einer homogegen Kautschukumgebung angeordnet ist.

Gemäß einer nächsten vorzugsweisen Ausgestaltungsform der vorliegenden Erfindung ist die mindestens eine elektromagnetische Sende- und Empfangsvorrichtung vollständig innerhalb des ersten homogenen Kautschukmaterials angeordnet.

Die mindestens eine elektromagnetische Sende- und Empfangsvorrichtung ist insbesondere vollständig von dem ersten homogenen Kautschukmaterial umgeben.

Gemäß einer nächsten vorzugsweisen Ausgestaltungsform der vorliegenden Erfindung beträgt ein zweiter räumlicher Abstand zwischen einem zweiten Oberflächenpunkt der mindestens einen elektromagnetischen Sende- und Empfangsvorrichtung zu einem ersten Oberflächenpunkt des zweiten homogenen Kautschukmaterials **mindestens 5 mm.** Dabei handelt es sich bei dem zweiten Oberflächenpunkt der mindestens einen elektromagnetischen Sende- und Empfangsvorrichtung und bei dem ersten Oberflächenpunkt des zweiten homogenen Kautschukmaterials um die räumlich einander nächstgelegenen Oberflächenpunkte der mindestens einen elektromagnetischen Sende- und Empfangsvorrichtung und des zweiten homogenen Kautschukmaterials.

Durch den erfindungsgemäßen Umstand, wonach ein zweiter räumlicher Abstand zwischen einem zweiten Oberflächenpunkt der mindestens einen elektromagnetischen Sende- und Empfangsvorrichtung zu einem ersten Oberflächenpunkt des zweiten homogenen Kautschukmaterials **mindestens 5 mm** beträgt, wobei es sich bei dem zweiten Oberflächenpunkt der mindestens einen elektromagnetischen Sende- und Empfangsvorrichtung und bei dem ersten Oberflächenpunkt des zweiten homogenen Kautschukmaterials um die räumlich einander nächstgelegenen Oberflächenpunkte der mindestens einen elektromagnetischen Sende- und Empfangsvorrichtung und des zweiten homogenen Kautschukmaterials handelt, **wird ein mechanischer Schutz der** mindestens einen elektromagnetischen Sende- und Empfangsvorrichtung sichergestellt und es wird sichergestellt, dass die mindestens eine elektromagnetische Sende- und Empfangsvorrichtung innerhalb einer homogegen Kautschukumgebung angeordnet ist.

Gemäß einer nächsten vorzugsweisen Ausgestaltungsform der vorliegenden Erfindung beträgt ein dritter räumlicher Abstand zwischen einem dritten Oberflächenpunkt der mindestens einen elektromagnetischen Sende- und Empfangsvorrichtung zu einem Endpunkt einer Karkasslage des Reifens **mindestens 10 mm.** Bei dem dritten Oberflächenpunkt der mindestens einen elektromagnetischen Sende- und Empfangsvorrichtung und bei dem Endpunkt der Karkasslage des Reifens handelt es sich um die räumlich einander nächstgelegenen Oberflächenpunkte der mindestens einen elektromagnetischen Sende- und Empfangsvorrichtung und der Karkasslage des Reifens handelt.

Somit wird insbesondere ein minimaler räumlicher Abstand zwischen der mindestens einen elektromagnetischen Sende- und Empfangsvorrichtung zu der Karkasslage eingehalten. Dies führt dazu, dass die mindestens eine elektromagnetische Sende- und Empfangsvorrichtung kaum elektromagnetisch abgeschirmt wird. Bei der Karkasslage handelt es sich um die dem Apex räumlich nächstgelegene Karkasslage.

Gemäß einer nächsten vorzugsweisen Ausgestaltungsform der vorliegenden Erfindung beträgt ein dritter räumlicher Abstand mit einer positiven Komponente **in radialer Richtung** zwischen einem dritten Oberflächenpunkt der mindestens einen elektromagnetischen Sende-und Empfangsvorrichtung zu einem Endpunkt einer Karkasslage des Reifens **mindestens 10 mm.** Somit liegt die elektromagnetische Sende- und Empfangsvorrichtung ausgehend von der Rotationsachse in radialer Richtung weiter von der Rotationsachse entfernt als der Endpunkt der Karkasslage. Dadurch wird eine elektromagnetische Abschirmung der elektromagnetischen Sende- und Empfangsvorrichtung durch die Karkasslage weitestgehend vermieden.

Positive Komponente bedeutet, dass die Richtung von der Rotationsachse weg weist.

Die radiale Richtung weist rechtwinklig von der Rotationsachse weg.

Gemäß einer nächsten vorzugsweisen Ausgestaltungsform der vorliegenden Erfindung beträgt ein vierter räumlicher Abstand zwischen einem vierten Oberflächenpunkt der mindestens einen elektromagnetischen Sende- und Empfangsvorrichtung zu einem Endpunkt eines Wulstverstärkers des Reifens **mindestens 10 mm.** Bei dem vierten Oberflächenpunkt der mindestens einen elektromagnetischen Sende- und Empfangsvorrichtung und bei dem Endpunkt des Wulstverstärkers des Reifens handelt es sich um die räumlich einander nächstgelegenen Oberflächenpunkte der mindestens einen elektromagnetischen Sende- und Empfangsvorrichtung und des Wulstverstärkers des Reifens.

Somit wird insbesondere ein minimaler räumlicher Abstand zwischen der mindestens einen elektromagnetischen Sende- und Empfangsvorrichtung zu dem Wulstverstärker eingehalten. Dies führt dazu, dass die mindestens eine elektromagnetische Sende- und Empfangsvorrichtung kaum elektromagnetisch abgeschirmt wird. Bei dem Wulstverstärker handelt es sich um den dem Apex räumlich nächstgelegenen Wulstverstärker.

Gemäß einer nächsten vorzugsweisen Ausgestaltungsform der vorliegenden Erfindung beträgt ein vierter räumlicher Abstand mit einer positiven Komponente in radialer Richtung zwischen einem vierten Oberflächenpunkt der mindestens einen elektromagnetischen Sende- und Empfangsvorrichtung zu einem Endpunkt eines Wulstverstärkers des Reifens **mindestens 10 mm.**

Somit liegt die elektromagnetische Sende- und Empfangsvorrichtung ausgehend von der Rotationsachse in radialer Richtung weiter von der Rotationsachse entfernt als der Endpunkt des Wulstverstärkers. Dadurch wird eine elektromagnetische Abschirmung der elektromagnetischen Sende- und Empfangsvorrichtung durch den Wulstverstärker weitestgehend vermieden.

Positive Komponente bedeutet, dass die Richtung von der Rotationsachse weg weist.

Die radiale Richtung weist rechtwinklig von der Rotationsachse weg.

Weitere Merkmale, Vorteile und Einzelheiten, auf die die Erfindung in ihrem Umfang aber nicht beschränkt ist, werden nun anhand der Zeichnungen näher beschrieben.

Es zeigt:
Fig. 1: Eine schematische Darstellung eines erfindungsgemäßen Reifens in Radialschnittansicht;
Fig. 2: Eine schematische Darstellung einer erfindungsgemäßen elektromagnetischen Sende-und Empfangsvorrichtung zur Anordnung in einem erfindungsgemäßen Reifen;
Fig. 3: Eine schematische Darstellung eines Wulstbereichs eines erfindungsgemäßen Reifens;
Fig 4: Eine schematische Darstellung eines Wulstbereichs eines erfindungsgemäßen Reifens gemäß einer Ausführungsform;
Fig 5: Eine schematische Darstellung eines Wulstbereichs eines erfindungsgemäßen Reifens gemäß einer weiteren Ausführungsform;
Fig 6: Eine schematische Darstellung eines Wulstbereichs eines erfindungsgemäßen Reifens gemäß einer weiteren Ausführungsform.

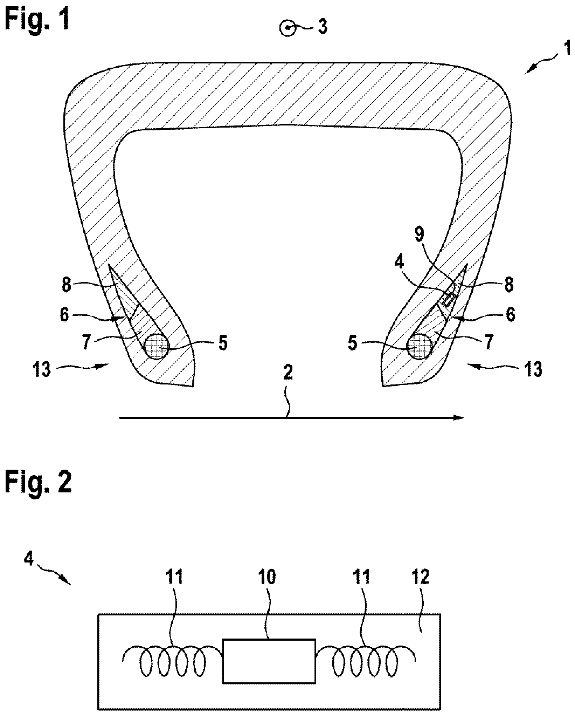

In der Figur 1 ist ein erfindungsgemäßer Reifen 1 schematisch in Radialschnittansicht dargestellt. Der Reifen 1 ist um eine Rotationsachse 2 in eine Umlaufrichtung 3 rotierbar.

Der Reifen 1 weist mindestens eine elektromagnetische Sende- und Empfangsvorrichtung 4, mindestens einen Wulstkern 5 und mindestens einen Apex 6 auf.

Der mindestens eine Wulstkern 5 ist in einem Wulstbereich 13 des Reifens 1 angeordnet.

Der mindestens eine Apex 6 ist aus einem ersten homogenen Kautschukmaterial 7 und aus einem zweiten homogenen Kautschukmaterial 8 ausgebildet. Das erste homogene Kautschukmaterial 7 ist an dem mindestens einen Wulstkern 5 angeordnet und das erste homogene Kautschukmaterial 7 ist räumlich zwischen dem mindestens einen Wulstkern 5 und dem einen zweiten homogenen Kautschukmaterial 8 angeordnet.

Die mindestens eine elektromagnetische Sende- und Empfangsvorrichtung 4 ist innerhalb des mindestens einen Apex 6 angeordnet.

Gemäß der in der Figur 1 schematisch dargestellten Ausführungsform der Erfindung weist die mindestens eine elektromagnetische Sende- und Empfangsvorrichtung 4 eine Haftvermittlerbeschichtung 9 auf.

In der Figur 2 ist eine erfindungsgemäße elektromagnetische Sende- und Empfangsvorrichtung 4 zur Anordnung in einem erfindungsgemäßen Reifen 1 schematisch dargestellt. Gemäß der Darstellung in der Figur 2 weist die mindestens eine elektromagnetische Sende- und Empfangsvorrichtung 4 eine Informationsspeicherkomponente 10 und zwei Antennen 11 auf.

Die zwei Antennen 11 und die Informationsspeicherkomponente 10 sind in ein Garn 12 eingebracht.

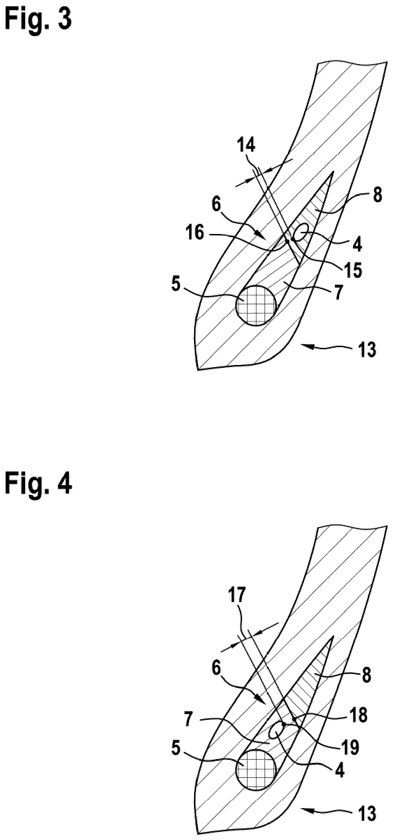

In der Figur 3 ist eine Wulstbereich 13 eines erfindungsgemäßen Reifens 1 schematisch dargestellt. Gemäß der Darstellung in der Figur 3 ist die mindestens eine elektromagnetische Sende- und Empfangsvorrichtung 4 vollständig innerhalb des zweiten homogenen Kautschukmaterials 8 angeordnet.

Gemäß der in der Figur 3 schematisch dargestellten Ausführungsform der Erfindung beträgt ein erster räumlicher Abstand 14 zwischen einem ersten Oberflächenpunkt 15 der mindestens einen elektromagnetischen Sende- und Empfangsvorrichtung 4 zu einem ersten Oberflächenpunkt 16 des ersten homogenen Kautschukmaterials 7 **mindestens 5 mm.**

Bei dem ersten Oberflächenpunkt 15 der mindestens einen elektromagnetischen Sende- und Empfangsvorrichtung 4 und bei dem ersten Oberflächenpunkt 16 des ersten homogenen Kautschukmaterials 7 handelt es sich um die räumlich einander nächstgelegenen Oberflächenpunkte 15, 16 der mindestens einen elektromagnetischen Sende- und Empfangsvorrichtung 4 und des ersten homogenen Kautschukmaterials 7.

In der Figur 4 ist eine Wulstbereich 13 eines erfindungsgemäßen Reifens 1 schematisch gemäß einer Ausführungsform dargestellt. Gemäß der Darstellung in der Figur 4 ist die mindestens eine elektromagnetische Sende- und Empfangsvorrichtung 4 vollständig innerhalb des ersten homogenen Kautschukmaterials 7 angeordnet.

Gemäß der in der Figur 4 schematisch dargestellten Ausführungsform der Erfindung beträgt ein zweiter räumlicher Abstand 17 zwischen einem zweiten Oberflächenpunkt 19 der mindestens einen elektromagnetischen Sende- und Empfangsvorrichtung 4 zu einem ersten Oberflächenpunkt 18 des zweiten homogenen Kautschukmaterials 8 **mindestens 5 mm.**

Bei dem zweiten Oberflächenpunkt 19 der mindestens einen elektromagnetischen Sende- und Empfangsvorrichtung 4 und bei dem ersten Oberflächenpunkt 18 des zweiten homogenen Kautschukmaterials 8 handelt es sich um die räumlich einander nächstgelegenen Oberflächenpunkte 19, 18 der mindestens einen elektromagnetischen Sende- und Empfangsvorrichtung 4 und des zweiten homogenen Kautschukmaterials 8.

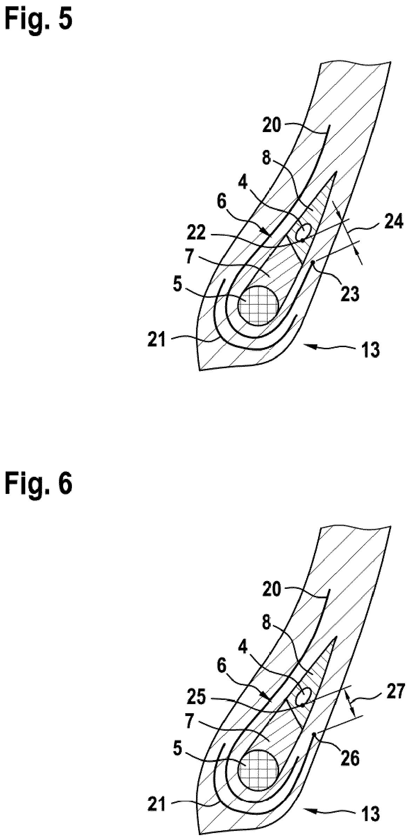

In der Figur 5 ist ein Wulstbereich 13 eines erfindungsgemäßen Reifens 1 schematisch gemäß einer weiteren Ausführungsform dargestellt. Gemäß der Darstellung in der Figur 5 ist die mindestens eine elektromagnetische Sende- und Empfangsvorrichtung 4 vollständig innerhalb des zweiten homogenen Kautschukmaterials 8 angeordnet.

Gemäß der in der Figur 5 schematisch dargestellten Ausführungsform der Erfindung weist der Reifen 1 eine Karkasslage 20 und einen Wulstverstärker 21 auf. Ein dritter räumlicher Abstand 24 zwischen einem dritten Oberflächenpunkt 22 der mindestens einen elektromagnetischen Sende- und Empfangsvorrichtung 4 zu einem Endpunkt 23 einer Karkasslage 20 des Reifens 1 beträgt **mindestens 10 mm.** Bei dem dritten Oberflächenpunkt 22 der mindestens einen elektromagnetischen Sende- und Empfangsvorrichtung 4 und bei dem Endpunkt 23 der Karkasslage 20 des Reifens 1 handelt es sich um die räumlich einander nächstgelegenen Oberflächenpunkte 22, 23 der mindestens einen elektromagnetischen Sende-und Empfangsvorrichtung 4 und der Karkasslage 20 des Reifens 1.

Gemäß der Darstellung in der Figur 5 reicht die Karkasslage 20 näher an die mindestens einen elektromagnetischen Sende- und Empfangsvorrichtung 4 heran als der Wulstverstärker 21.

In der Figur 6 ist ein Wulstbereich 13 eines erfindungsgemäßen Reifens 1 schematisch gemäß einer weiteren Ausführungsform dargestellt. Gemäß der Darstellung in der Figur 6 ist die mindestens eine elektromagnetische Sende- und Empfangsvorrichtung 4 vollständig innerhalb des zweiten homogenen Kautschukmaterials 8 angeordnet.

Gemäß der in der Figur 6 schematisch dargestellten Ausführungsform der Erfindung weist der Reifen 1 eine Karkasslage 20 und einen Wulstverstärker 21 auf. Ein vierter räumlicher Abstand 27 zwischen einem vierten Oberflächenpunkt 25 der mindestens einen elektromagnetischen Sende- und Empfangsvorrichtung 4 zu einem Endpunkt 26 eines Wulstverstärkers 21 des Reifens 1 beträgt **mindestens 10 mm.** Bei dem vierten Oberflächenpunkt 25 der mindestens einen elektromagnetischen Sende- und Empfangsvorrichtung 4 und bei dem Endpunkt 26 des Wulstverstärkers 21 des Reifens 1 handelt es sich um die räumlich einander nächstgelegenen Oberflächenpunkte 25, 26 der mindestens einen elektromagnetischen Sende- und Empfangsvorrichtung 4 und des Wulstverstärkers 21 des Reifens 1.

Gemäß der Darstellung in der Figur 6 reicht der Wulstverstärker 21 näher an die mindestens einen elektromagnetischen Sende- und Empfangsvorrichtung 4 heran als die Karkasslage 20.

### Bezugszeichenliste (ist Teil der Beschreibung)

- 1: Elektromagnetische Sende- und Empfangsvorrichtung
- 2: Rotationsachse
- 3: Umlaufrichtung
- 4: Elektromagnetische Sende- und Empfangsvorrichtung
- 5: Wulstkern
- 6: Apex
- 7: Erstes homogenes Kautschukmaterial
- 8: Zweites homogenes kautschukmaterial
- 9: Haftvermittlerbeschichtung
- 10: Informationsspeicherkomponente
- 11: Antenne
- 12: Garn
- 13: Wulstbereich
- 14: Erster räumlicher Abstand
- 15: Erster Oberflächenpunkt der mindestens einen elektromagnetischen Sende- und Empfangsvorrichtung
- 16: Erster Oberflächenpunkt des ersten homogenen Kautschukmaterials
- 17: Zweiter räumlicher Abstand
- 18: Erster Oberflächenpunkt des zweiten homogenen Kautschukmaterials
- 19: Zweiter Oberflächenpunkt der mindestens einen elektromagnetischen Sende- und Empfangsvorrichtung
- 20: Karkasslage
- 21: Wulstverstärker
- 22: Dritter Oberflächenpunkt der mindestens einen elektromagnetischen Sende- und Empfangsvorrichtung
- 23: Endpunkt der Karkasslage
- 24: Dritter räumlicher Abstand
- 25: Vierter Oberflächenpunkt der mindestens einen elektromagnetischen Sende- und Empfangsvorrichtung
- 26: Endpunkt des Wulstverstärkers
- 27: Vierter räumlicher Abstand

## Patentansprüche

1. Reifen (1), wobei der Reifen (1) um eine Rotationsachse (2) in eine Umlaufrichtung (3) rotierbar ist, aufweisend mindestens eine elektromagnetische Sende- und Empfangsvorrichtung (4), mindestens einen Wulstkern (5) und mindestens einen Apex (6), wobei der mindestens eine Apex (6) aus einem ersten homogenen Kautschukmaterial (7) und aus einem zweiten homogenen Kautschukmaterial (8) ausgebildet ist, wobei das erste homogene Kautschukmaterial (7) an dem mindestens einen Wulstkern (5) angeordnet ist und das erste homogene Kautschukmaterial (7) räumlich zwischen dem mindestens einen Wulstkern (5) und dem einen zweiten homogenen Kautschukmaterial (8) angeordnet ist, wobei die mindestens eine elektromagnetische Sende- und Empfangsvorrichtung (4) innerhalb des mindestens einen Apex (6) angeordnet ist, **dadurch gekennzeichnet, dass** die mindestens eine elektromagnetische Sende- und Empfangsvorrichtung (4) eine Informationsspeicherkomponente (10) und mindestens eine Antenne (11) aufweist, wobei die mindestens eine Antenne (11) in ein Garn (12) eingebracht ist oder die mindestens eine Antenne (11) und die Informationsspeicherkomponente (10) in ein Garn (12) eingebracht sind.

2. Reifen (1) nach Anspruch 1, **dadurch gekennzeichnet, dass** die mindestens eine elektromagnetische Sende- und Empfangsvorrichtung (4) eine Haftvermittlerbeschichtung (9) aufweist.

3. Reifen (1) nach einem der vorhergehenden Ansprüche, **dadurch gekennzeichnet, dass** die mindestens eine elektromagnetische Sende- und Empfangsvorrichtung (4) vollständig innerhalb des zweiten homogenen Kautschukmaterials (8) angeordnet ist.

4. Reifen (1) nach dem vorhergehenden Anspruch, **dadurch gekennzeichnet, dass** ein erster räumlicher Abstand (14) zwischen einem ersten Oberflächenpunkt (15) der mindestens einen elektromagnetischen Sende- und Empfangsvorrichtung (4) zu einem ersten Oberflächenpunkt (16) des ersten homogenen Kautschukmaterials (7) **mindestens 5 mm** beträgt, wobei es sich bei dem ersten Oberflächenpunkt (15) der mindestens einen elektromagnetischen Sende- und Empfangsvorrichtung (4) und bei dem ersten Oberflächenpunkt (16) des ersten homogenen Kautschukmaterials (7) um die räumlich einander nächstgelegenen Oberflächenpunkte (15, 16) der mindestens einen elektromagnetischen Sende- und Empfangsvorrichtung (4) und des ersten homogenen Kautschukmaterials (7) handelt.

5. Reifen (1) nach einem der vorhergehenden Ansprüche 1 bis 2, **dadurch gekennzeichnet, dass** die mindestens eine elektromagnetische Sende- und Empfangsvorrichtung (4) vollständig innerhalb des ersten homogenen Kautschukmaterials (7) angeordnet ist.

6. Reifen (1) nach dem vorhergehenden Anspruch, **dadurch gekennzeichnet, dass** ein zweiter räumlicher Abstand (17) zwischen einem zweiten Oberflächenpunkt (19) der mindestens einen elektromagnetischen Sende- und Empfangsvorrichtung (4) zu einem ersten Oberflächenpunkt (18) des zweiten homogenen Kautschukmaterials (8) **mindestens 5 mm** beträgt, wobei es sich bei dem zweiten Oberflächenpunkt (19) der mindestens einen elektromagnetischen Sende- und Empfangsvorrichtung (4) und bei dem ersten Oberflächenpunkt (18) des zweiten homogenen Kautschukmaterials (8) um die räumlich einander nächstgelegenen Oberflächenpunkte (19, 18) der mindestens einen elektromagnetischen Sende- und Empfangsvorrichtung (4) und des zweiten homogenen Kautschukmaterials (8) handelt.

7. Reifen (1) nach einem der vorhergehenden Ansprüche 1 bis 3, **dadurch gekennzeichnet, dass** ein dritter räumlicher Abstand (24) zwischen einem dritten Oberflächenpunkt (22) der mindestens einen elektromagnetischen Sende- und Empfangsvorrichtung (4) zu einem Endpunkt (23) einer Karkasslage (20) des Reifens (1) **mindestens 10 mm** beträgt, wobei es sich bei dem dritten Oberflächenpunkt (22) der mindestens einen elektromagnetischen Sende- und Empfangsvorrichtung (4) und bei dem Endpunkt (23) der Karkasslage (20) des Reifens (1) um die räumlich einander nächstgelegenen Oberflächenpunkte (22, 23) der mindestens einen elektromagnetischen Sende-und Empfangsvorrichtung (4) und der Karkasslage (20) des Reifens (1) handelt.

8. Reifen (1) nach einem der vorhergehenden Ansprüche 1 bis 3, **dadurch gekennzeichnet, dass** ein vierter räumlicher Abstand (27) zwischen einem vierten Oberflächenpunkt (25) der mindestens einen elektromagnetischen Sende- und Empfangsvorrichtung (4) zu einem Endpunkt (26) eines Wulstverstärkers (21) des Reifens (1) **mindestens 10 mm** beträgt, wobei es sich bei dem vierten Oberflächenpunkt (25) der mindestens einen elektromagnetischen Sende- und Empfangsvorrichtung (4) und bei dem Endpunkt (26) des Wulstverstärkers (21) des Reifens (1) um die räumlich einander nächstgelegenen Oberflächenpunkte (25, 26) der mindestens einen elektromagnetischen Sende- und Empfangsvorrichtung (4) und des Wulstverstärkers (21) des Reifens (1) handelt.

## Claims

1. Tyre (1), wherein the tyre (1) is rotatable in a circumferential direction (3) about an axis of rotation (2), having at least one electromagnetic transmitting and receiving device (4), at least one bead core (5) and at least one apex (6), wherein the at least one apex (6) is formed of a first homogenous rubber material (7) and of a second homogenous rubber material (8), wherein the first homogenous rubber material (7) is arranged on the at least one bead core (5) and the first homogenous rubber material (7) is arranged spatially between the at least one bead core (5) and the one second homogenous rubber material (8), wherein the at least one electromagnetic transmitting and receiving device (4) is arranged within the at least one apex (6), **characterized in that** the at least one electromagnetic transmitting and receiving device (4) has an information storage component (10) and at least one antenna (11), wherein the at least one antenna (11) is incorporated in a yarn (12) or the at least one antenna (11) and the information storage component (10) are incorporated in a yarn (12).

2. Tyre (1) according to Claim 1, **characterized in that** the at least one electromagnetic transmitting and receiving device (4) has an adhesion-promoter coating (9).

3. Tyre (1) according to one of the preceding claims, **characterized in that** the at least one electromagnetic transmitting and receiving device (4) is arranged completely within the second homogenous rubber material (8).

4. Tyre (1) according to the preceding claim, **characterized in that** a first spatial distance (14) between a first surface point (15) of the at least one electromagnetic transmitting and receiving device (4) and a first surface point (16) of the first homogenous rubber material (7) is **at least 5 mm,** wherein the first surface point (15) of the at least one electromagnetic transmitting and receiving device (4) and the first surface point (16) of the first homogenous rubber material (7) are the spatially mutually closest surface points (15, 16) of the at least one electromagnetic transmitting and receiving device (4) and the first homogenous rubber material (7).

5. Tyre (1) according to one of the preceding Claims 1 to 2, **characterized in that** the at least one electromagnetic transmitting and receiving device (4) is arranged completely within the first homogenous rubber material (7).

6. Tyre (1) according to the preceding claim, **characterized in that** a second spatial distance (17) between a second surface point (19) of the at least one electromagnetic transmitting and receiving device (4) and a first surface point (18) of the second homogenous rubber material (8) is **at least 5 mm,** wherein the second surface point (19) of the at least one electromagnetic transmitting and receiving device (4) and the first surface point (18) of the second homogenous rubber material (8) are the spatially mutually closest surface points (19, 18) of the at least one electromagnetic transmitting and receiving device (4) and the second homogenous rubber material (8).

7. Tyre (1) according to one of the preceding Claims 1 to 3, **characterized in that** a third spatial distance (24) between a third surface point (22) of the at least one electromagnetic transmitting and receiving device (4) and an end point (23) of a carcass ply (20) of the tyre (1) is **at least 10 mm,** wherein the third surface point (22) of the at least one electromagnetic transmitting and receiving device (4) and the end point (23) of the carcass ply (20) of the tyre (1) are the spatially mutually closest surface points (22, 23) of the at least one electromagnetic transmitting and receiving device (4) and the carcass ply (20) of the tyre (1).

8. Tyre (1) according to one of the preceding Claims 1 to 3, **characterized in that** a fourth spatial distance (27) between a fourth surface point (25) of the at least one electromagnetic transmitting and receiving device (4) and an end point (26) of a bead reinforcement (21) of the tyre (1) is **at least 10 mm,** wherein the fourth surface point (25) of the at least one electromagnetic transmitting and receiving device (4) and the end point (26) of the bead reinforcement (21) of the tyre (1) are the spatially mutually closest surface points (25, 26) of the at least one electromagnetic transmitting and receiving device (4) and the bead reinforcement (21) of the tyre (1).

## Revendications

1. Pneumatique (1), le pneumatique (1) pouvant être entraîné en rotation sur un axe de rotation (2) dans un sens de rotation (3), le pneumatique comportant au moins un dispositif d'émission et de réception électromagnétique (4), au moins une tringle de talon (5) et au moins un sommet (6), l'au moins un sommet (6) étant formé à partir d'un premier matériau de caoutchouc homogène (7) et d'un deuxième matériau de caoutchouc homogène (8), le premier matériau de caoutchouc homogène (7) étant disposé sur l'au moins une tringle de talon (5) et le premier matériau de caoutchouc homogène (7) étant disposé dans l'espace ménagé entre l'au moins une tringle de talon (5) et le deuxième matériau de caoutchouc homogène (8), l'au moins un dispositif d'émission et de réception électromagnétique (4) étant disposé à l'intérieur de l'au moins un sommet (6), **caractérisé en ce que** l'au moins un dispositif d'émission et de réception électromagnétique (4) comporte un composant de mémorisation d'informations (10) et au moins une antenne (11), l'au moins une antenne (11) étant incorporée dans un fil (12) ou l'au moins une antenne (11) et le composant de mémorisation d'informations (10) étant incorporés dans un fil (12).

2. Pneumatique (1) selon la revendication 1, **caractérisé en ce que** l'au moins un dispositif d'émission et de réception électromagnétique (4) comporte un revêtement promoteur d'adhérence (9).

3. Pneumatique (1) selon l'une des revendications précédentes, **caractérisé en ce que** l'au moins un dispositif d'émission et de réception électromagnétique (4) est disposé entièrement à l'intérieur du deuxième matériau de caoutchouc homogène (8).

4. Pneumatique (1) selon la revendication précédente, **caractérisé en ce qu'**une première distance spatiale (14) entre un premier point de surface (15) de l'au moins un dispositif d'émission et de réception électromagnétique (4) et un premier point de surface (16) du premier matériau de caoutchouc homogène (7) est d'au moins 5 mm, le premier point de surface (15) de l'au moins un dispositif d'émission et de réception électromagnétique (4) et le premier point de surface (16) du premier matériau de caoutchouc homogène (7) étant les points de surface (15, 16) spatialement les plus proches de l'au moins un dispositif d'émission et de réception électromagnétique (4) et du premier matériau de caoutchouc homogène (7).

5. Pneumatique (1) selon l'une des revendications précédentes 1 à 2, **caractérisé en ce que** l'au moins un dispositif d'émission et de réception électromagnétique (4) est disposé entièrement à l'intérieur du premier matériau de caoutchouc homogène (7).

6. Pneumatique (1) selon la revendication précédente, **caractérisé en ce qu'**une deuxième distance spatiale (17) entre un deuxième point de surface (19) de l'au moins un dispositif d'émission et de réception électromagnétique (4) et un premier point de surface (18) du deuxième matériau de caoutchouc homogène (8) est d'au moins 5 mm, le deuxième point de surface (19) de l'au moins un dispositif d'émission et de réception électromagnétique (4) et le premier point de surface (18) du deuxième matériau de caoutchouc homogène (8) étant les points de surface (19, 18) spatialement les plus proches de l'au moins un dispositif d'émission et de réception électromagnétique (4) et du deuxième matériau de caoutchouc homogène (8).

7. Pneumatique (1) selon l'une des revendications précédentes 1 à 3, **caractérisé en ce qu'**une troisième distance spatiale (24) entre un troisième point de surface (22) de l'au moins un dispositif d'émission et de réception électromagnétique (4) et un point d'extrémité (23) d'une nappe de carcasse (20) du pneumatique (1) est d'au moins 10 mm, le troisième point de surface (22) de l'au moins un dispositif d'émission et de réception électromagnétique (4) et le point d'extrémité (23) de la nappe de carcasse (20) du pneumatique (1) étant les points de surface (22, 23) spatialement les plus proches de l'au moins un dispositif d'émission et de réception électromagnétique (4) et de la nappe de carcasse (20) du pneumatique (1).

8. Pneumatique (1) selon l'une des revendications précédentes 1 à 3, **caractérisé en ce qu'**une quatrième distance spatiale (27) entre un quatrième point de surface (25) de l'au moins un dispositif d'émission et de réception électromagnétique (4) et un point d'extrémité (26) d'une armature de talon (21) du pneumatique (1) est d'au moins 10 mm, le quatrième point de surface (25) de l'au moins un dispositif d'émission et de réception électromagnétique (4) et le point d'extrémité (26) de l'armature de talon (21) du pneumatique (1) étant les points de surface (25, 26) spatialement les plus proches de l'au moins un dispositif d'émission et de réception électromagnétique (4) et de l'armature de talon (21) du pneumatique (1).
